# EUROPÄISCHE PATENTSCHRIFT

(11) **EP 2 305 407 B1**
(45) Veröffentlichungstag und Bekanntmachung des Hinweises auf die Patenterteilung: **21.10.2015**
(21) Anmeldenummer: 10173192.5
(22) Anmeldetag: 18.08.2010
(51) Int. Cl.: B23B 31/02, B23P 11/02

(54) **Verfahren und Anordnung zur Einrichtung eines Werkzeughalters, Werkzeughalter und Verwendung**
Method and arrangement for setting up a tool holder, tool holder and their use
Procédé et agencement destinés à la disposition d'un support d'outil, outil et leurutilisation

(30) Priorität: 02.10.2009 DE 102009049090; 24.10.2009 DE 102009050613; 17.11.2009 DE 102009053615
(43) Veröffentlichungstag der Anmeldung: 06.04.2011
(73) Patentinhaber: Fahrion, Ulrich, 73667 Kaiserbach (DE)
(72) Erfinder: Fahrion, Ulrich, 73667 Kaiserbach (DE)
(74) Vertreter: DREISS Patentanwälte PartG mbB

(56) Entgegenhaltungen:
- WO-A1-01/89758
- WO-A1-2004/052591
- DE-A1- 10 025 007
- DE-U1- 29 612 743
- DE-U1-202004 010 714
- JP-A- 2008 168 373

## Beschreibung

Die Erfindung betrifft ein Verfahren gemäß dem Oberbegriff des Patentanspruchs 1 und eine Anordnung gemäß dem Oberbegriff des Patentanspruchs 14 zur Einrichtung eines Werkzeughalters, einen Werkzeughalter gemäß dem Oberbegriff des Patentanspruchs 17 und eine Verwendung gemäß dem Oberbegriff des Patentanspruchs 20.

Werkzeughalter der vorstehend genannten Art dienen zum Halten von Werkzeugen wie Fräsern, Bohrern, Gewindebohrern oder dergleichen. Das Werkzeug ist reibschlüssig in der Spannzange fixiert, welche ihrerseits reibschlüssig in dem Spannzangenfutter fixiert ist. Üblicherweise weist die Spannzange eine hohlzylindrische Öffnung zur Aufnahme eines zylindrischen Spannschafts des Werkzeugs auf. Ferner ist die Spannzange üblicherweise mit Schlitzen oder Nuten versehen, so dass Materialabschnitte der Spannzange nach radial innen in Richtung auf den Spannschaft des Werkzeugs gedrückt werden können. Die Spannzange weist üblicherweise mindestens eine nach radial außen weisende konische Klemmfläche auf, welche mit einer nach radial innen weisenden, konischen Fläche des Spannzangenfutter zusammenwirkt. Damit das Werkzeug reibschlüssig in der Spannzange gehalten ist, und damit die Spannzange ihrerseits reibschlüssig in dem Spannzangenfutter gehalten ist, wird eine Spannmutter verwendet, welche mit dem Spannzangenfutter verschraubt wird und die Spannzange so verformt, dass die reibschlüssigen Verbindungen zu dem Spannzangenfutter und zu dem Werkzeug hergestellt werden.

Ein vorstehend beschriebener Werkzeughalter ist beispielsweise aus der EP 1 616 647 B1 bekannt.

Während der Bearbeitung eines Werkstücks mit Hilfe eines an dem Werkzeughalter gehaltenen Werkzeugs können in bestimmten Fällen sehr hohe Bearbeitungskräfte auftreten. Dies ist insbesondere bei einer Schruppbearbeitung eines Werkstücks mit Hilfe eines Fräswerkzeugs der Fall. Bei großen Drallwinkeln von beispielsweise größer oder gleich 45° des Fräswerkzeugs wirken hohe Auszugskräfte auf das Werkzeug, welches im ungünstigsten Fall während der Bearbeitung des Werkstücks aus der Spannzange des Werkzeughalters herausgezogen wird.

Hiervon ausgehend liegt der vorliegenden Erfindung die Aufgabe zugrunde, ein Verfahren zur Einrichtung eines Werkzeughalters anzugeben, mit welchem eine besonders zuverlässige Fixierung eines Werkzeugs an dem Werkzeughalter ermöglicht wird.

Diese Aufgabe wird bei einem vorstehend genannten Verfahren erfindungsgemäß dadurch gelöst, dass die Spannmutter und das Spannzangenfutter mit einem ersten Anzugsmoment miteinander verschraubt werden, dass anschließend die Spannmutter und/oder das Spannzangenfutter so temperiert wird oder werden, dass die Spannmutter eine höhere Temperatur aufweist als das Spannzangenfutter und/oder die Spannzange, und dass, während die Spannmutter eine höhere Temperatur aufweist als das Spannzangenfutter und/oder die Spannzange, die Spannmutter und das Spannzangenfutter mit einem zweiten Anzugsmoment miteinander verschraubt werden.

Prinzipiell ist es möglich, die Spannmutter mit einem sehr hohen Anzugsmoment anzuziehen, um hohe Reibkräfte zwischen der Spannzange und dem Werkzeug zu erzeugen. Im Rahmen der Erfindung wurde jedoch erkannt, dass bei Überschreitung eines bestimmten Grenzwerts eine Erhöhung des Anzugsmoments nicht mehr mit einer Erhöhung der Reibkraft zwischen der Spannzange und dem Werkzeug korreliert. Dies hat zur Folge, dass bei Überschreitung eines Grenzdrehmoments ein zum gewaltsamen Lösen des Werkzeugs von dem Werkzeughalter erforderliches Lösemoment auf einem in etwa konstanten Niveau verharrt. Beispielsweise konnte für ein Werkzeug in Form eines Schruppfräsers mit einem Durchmesser von sechzehn Millimetern festgestellt werden, dass Spannmutter-Anzugsmomente größer als circa 140 Nm nicht mehr zu einer Erhöhung des Lösemoments beitragen, welches auf einem Wert von circa 160 Nm verharrt.

Das erfindungsgemäße Verfahren ermöglicht nun eine Vormontage, bei welcher die Spannmutter und das Spannzangenfutter mit einem ersten Anzugsmoment miteinander verschraubt werden und wobei das Werkzeug und der Werkzeughalter bereits miteinander gefügt sind. Beispielsweise sind das Werkzeug und der Werkzeughalter noch nicht so fest miteinander verspannt, dass die aus Werkzeug und Werkzeughalter gebildete VormontageEinheit bereits für die Bearbeitung eines Werkstücks verwendbar wäre. Von einem Vormontagezustand ausgehend wird der Werkzeughalter ungleichförmig temperiert, so dass die Spannmutter eine höhere Temperatur aufweist als das Spannzangenfutter und/oder die Spannzange. Abschließend werden die Spannmutter und das Spannzangenfutter mit einem zweiten Anzugsmoment miteinander verschraubt, und zwar während die Temperaturverteilung des Werkzeughalters noch ungleichmäßig ist.

Es ist nicht erforderlich, jedoch bevorzugt, dass die Verschraubung mit dem zweiten Anzugsmoment kurz vor Abschluss des Temperiervorgangs, am Ende des Temperiervorgangs oder unmittelbar nach Ende des Temperiervorgangs erfolgt. Hierdurch wird erreicht, dass eine zur Temperierung des Werkzeughalters eingesetzte Energiemenge weitestgehend vollständig genutzt werden kann und dass sich nicht bereits vor Ausübung des zweiten Anzugsmoments die ungleichförmige Temperaturverteilung des Werkzeughalters wieder ausgleicht, insbesondere durch Abgabe von Wärme von der Spannmutter an die Spannzange oder das Spannzangenfutter.

Die ungleichförmige Temperaturverteilung des Werkzeughalters ermöglicht es, den Verdrehweg der Spannmutter relativ zu dem Spannzangenfutter zu verlängern. Dies hat zur Folge, dass nach Ausgleich der ungleichförmigen Temperaturverteilung des Werkzeughalters (also nach Abkühlung der Spannmutter und/oder nach Erwärmung des Spannzangenfutters und/oder der Spannzange) zwischen der Spannzange und dem Werkzeug höhere Spannbeziehungsweise Reibkräfte wirken. Hierdurch wird ein zum gewaltsamen Lösen des Werkzeugs von der Spannzange erforderliches Lösemoment deutlich erhöht. Für das eingangs beschriebene Beispiels eines 16mm-Schruppfräsers konnte das Lösemoment verdoppelt und auf circa 320 Nm erhöht werden. Dabei ist es besonders vorteilhaft, dass zur Erreichung dieses Werts keine Erhöhung des Anzugsmoments, mit welchem die Spannmutter relativ zu dem Spannzangenfutter angezogen wird, erforderlich ist. Für das vorstehend beschriebene Beispiel konnte also eine Verdoppelung des Lösemoments auf circa 320 Nm unter Beibehaltung des Anzugsmoments in Höhe von 140 Nm erreicht werden.

Im Rahmen der Erfindung ist es möglich, ausgehend von einer gleichförmigen Temperaturverteilung des Werkzeughalters zumindest im Wesentlichen ausschließlich die Spannmutter zu erwärmen. Dies ermöglicht eine schnelle und einfache ungleichförmige Temperierung des Werkzeughalters, da die Spannmutter üblicherweise eine im Vergleich zu dem Spannzangenfutter geringere Masse aufweist.

Für die Erwärmung der Spannmutter kann beispielsweise ein sich selbst erwärmendes Temperierelement (beispielsweise in Form eines zu bestromenden elektrischen Widerstands) verwendet werden, welches die Wärme durch Strahlung, Konvektion oder Kontakt mit der Spannmutter abgibt.

Besonders bevorzugt ist es jedoch, wenn die Erwärmung der Spannmutter mittels einer Induktionsspule erfolgt. Eine mit einem Wechselstrom bestromte Induktionsspule erzeugt ein magnetisches Wechselfeld, welches in einem elektrischen Leiter Wechselströme induziert. Hierdurch ist es möglich, die aus einem metallischen Material hergestellte Spannmutter zu erwärmen. Die Induktionsspule ermöglicht einen sehr präzisen, hohen und schnellen Energieeintrag in die Spannmutter. Beispielsweise konnte die Spannmutter eines für einen 16mm-Schruppfräser ausgelegten Werkzeughalters innerhalb von circa 5 Sekunden auf cirka 200°C erwärmt werden.

Es ist auch möglich, zumindest im Wesentlichen ausschließlich das Spannzangenfutter und/oder die Spannzange abzukühlen. Hierfür kann beispielsweise eine Kühleinrichtung, insbesondere in Form eines Kühlgebläses, verwendet werden.

Zur weiteren Erhöhung des Losbrechmoments eines Werkzeugs ist es möglich, dass die Spannzange und/oder das Spannzangenfutter so temperiert wird oder werden, dass die Spannzange eine niedrigere Temperatur aufweist als das Spannzangenfutter. Dies kann beispielsweise dadurch erreicht werden, dass ein kühlender Luftstrom auf die Spannzange geblasen wird.

Besonders bevorzugt ist es, wenn die Spannmutter erwärmt wird und gleichzeitig das Spannzangenfutter und/oder die Spannzange gekühlt wird oder werden, so dass eine besonders deutliche Verlängerung des Verdrehwegs der Spannmutter erreicht wird. Nach einer Ausführungsform der Erfindung ist vorgesehen, dass das zweite Anzugsmoment höher ist als das erste Anzugsmoment.

Bei einem weiteren bevorzugten Verfahren ist vorgesehen, dass das erste Anzugsmoment mit Handkraft erzeugt wird. Hierdurch ist es möglich, auf zusätzliche Werkzeuge verzichten zu können. Zusätzlich oder alternativ hierzu ist es möglich, dass das erste Anzugsmoment höchstens ungefähr 80% des zweiten Anzugsmoments beträgt, beispielsweise zwischen ungefähr 50 Nm und ungefähr 100 Nm.

Nach einer weiteren Ausführungsform der Erfindung beträgt das erste Anzugsmoment mindestens ungefähr 80% des zweiten Anzugsmoments. Hierdurch können sehr gute Rundlaufwerte eines in dem Werkzeughalter gehaltenen Werkzeugs erreicht werden.

Besonders gute Rundlaufwerte eines in dem Werkzeughalter gehaltenen Werkzeugs können erreicht werden, wenn das erste Anzugsmoment zumindest ungefähr gleich dem zweiten Anzugsmoment ist. Im Rahmen der vorliegenden Erfindung wird unter "ungefähr gleich" eine Abweichung von maximal 20%, vorzugsweise von maximal 10%, insbesondere von maximal 5% verstanden. Das zweite Anzugsmoment beträgt dann 80% bis 120% des ersten Anzugsmoments, vorzugsweise 90% bis 110% des ersten Anzugsmoments, insbesondere 95% bis 105% des ersten Anzugsmoments.

Nach einer weiteren Ausführungsform der Erfindung ist das erste Anzugsmoment höher als das zweite Anzugsmoment. Dies ist insbesondere vorteilhaft, wenn das erste Anzugsmoment maschinell und das zweite Anzugsmoment manuell erzeugt wird.

Ferner ist es bevorzugt, wenn das zweite Anzugsmoment dasselbe Anzugsmoment ist, welches zur Einrichtung des Werkzeughalters für ein bestimmtes Werkzeug vorgesehen ist, wenn weder die Spannmutter noch das Spannzangenfutter temperiert wird. Dies ermöglicht es, die Spannmutter unabhängig von einer Temperierung jeweils mit demselben Anzugsmoment anziehen zu können. Für das vorstehend beschriebene Beispiel eines 16mm-Schruppfräsers kann beispielsweise nach Erwärmung der Spannmutter diese mit einem Anzugsmoment von 140 Nm angezogen werden. Bei einem Verzicht auf eine Temperierung des Werkzeughalters wird dann ein Lösemoment von circa 160 Nm erreicht. Eine Erwärmung der Spannmutter und anschließendes Aufbringen des Anzugsmoments in Höhe von 140 Nm führt hingegen zu einem deutlich erhöhten Lösemoment von circa 320 Nm.

Die Erfindung betrifft ferner eine Anordnung mit den Merkmalen des Oberbegriffs des Anspruchs 14. Es ist aus der DE 100 25 007 A1 und aus der WO 01/89758 A1 bekannt, solche Anordnungen zur Erwärmung eines Werkzeughalters in Form eines sogenannten Schrumpffutters zu verwenden. Diese Schrumpffutter weisen eine zentrische Werkzeugaufnahme auf, welche so dimensioniert ist, dass der Schaft eines Werkzeugs nur nach Erwärmung des Schrumpffutters in die Werkzeugaufnahme einführbar ist. Nach Abkühlung des Schrumpffutters ist das Werkzeug dann reibschlüssig in dem Schrumpffutter gehalten. Schrumpffutter erfordern innerhalb enger Toleranzen gefertigte Werkzeugschaftflächen.

Der vorliegenden Erfindung liegt die weitere Aufgabe zugrunde, eine Anordnung zu schaffen, welche eine besonders zuverlässige Fixierung eines Werkzeugs an einem Werkzeughalter ermöglicht.

Diese Aufgabe wird bei einer Vorrichtung der vorstehend genannten Art erfindungsgemäß mit den Merkmalen des Anspruchs 14 gelöst.

Vorteile und Ausgestaltungen der erfindungsgemäßen Anordnung sind zum Teil bereits vorstehend im Zusammenhang mit den Vorteilen und Ausgestaltungen des erfindungsgemäßen Verfahrens erläutert worden. Daher wird im Folgenden lediglich auf jene Vorteile und Ausgestaltungen der erfindungsgemäßen Anordnung eingegangen, welche nicht bereits vorstehend im Zusammenhang mit den Vorteilen und Ausgestaltungen des erfindungsgemäßen Verfahrens erläutert worden sind.

Bei der erfindungsgemäßen Anordnung wird also nicht ein einteiliges Schrumpffutter erwärmt, sondern es wird ein mehrteiliger Werkzeughalter verwendet, dessen Bestandteile gezielt und ungleichförmig temperiert werden. Auf diese Weise können im Vergleich zu einteiligen Schrumpffuttern die Losbrechmomente deutlich erhöht werden. Darüber hinaus bleibt der prinzipielle Vorteil mehrteiliger Werkzeughalter erhalten, Werkzeuge mit Schaftdurchmessern einspannen zu können, welche in einem weitern Toleranzbereich variieren.

Bevorzugt ist es, wenn die Anordnung mindestens ein Temperierelement zur Erwärmung der Spannmutter und mindestens eine Kühleinrichtung zur Kühlung des Spannzangenfutters und/oder der Spannzange umfasst. Dies ermöglicht es, den Werkzeughalter sowohl lokal zu erwärmen als auch zu kühlen.

Bevorzugt ist es insbesondere, dass das Temperierelement und die Kühleinrichtung gleichzeitig ansteuerbar sind. Hierdurch kann der Werkzeughalter besonders schnell und effizient ungleichförmig temperiert werden.

Die Vorrichtung zur Einrichtung des Werkzeughalters umfasst eine Verschraubungseinrichtung zum Verschrauben der Spannmutter mit dem Spannzangenfutter. Insbesondere ist das Anzugsmoment der Verschraubungseinrichtung einstellbar. Die Verschraubungseinrichtung kann beispielsweise durch einen manuell handhabbaren Drehmomentschlüssel gebildet sein, so dass ein Anzugsmoment von einer Bedienperson erzeugt wird. Alternativ hierzu kann die Verschraubungseinrichtung auch einen motorischen Antrieb umfassen.

Die Erfindung betrifft ferner einen Werkzeughalter, welcher ein Spannzangenfutter, eine Spannzange und eine mit dem Spannzangenfutter verschraubbare Spannmutter aufweist, wobei die Spannzange zum Halten eines Werkzeugs ausgebildet und mittels der Spannmutter mit dem Werkzeug und dem Spannzangenfutter verspannbar ist. Ein solcher Werkzeughalter ist beispielsweise aus der EP 1 616 647 B1 bekannt.

Der vorliegenden Erfindung liegt die weitere Aufgabe zugrunde, einen Werkzeughalter zu schaffen, welche eine besonders zuverlässige Fixierung eines Werkzeugs ermöglicht.

Diese Aufgabe wird bei einem Werkzeughalter der vorstehend genannten Art erfindungsgemäß dadurch gelöst, dass die Spannmutter aus einem Werkstoff hergestellt ist, welcher eine im Vergleich zum Werkstoff des Spannzangenfutters und/oder der Spännzange ein höhere elastische Formveränderbarkeit aufweist.

Vorteile und Ausgestaltungen des erfindungsgemäßen Werkzeughalters sind zum Teil bereits vorstehend im Zusammenhang mit den Vorteilen und Ausgestaltungen des erfindungsgemäßen Verfahrens und der erfindungsgemäßen Vorrichtung erläutert worden. Daher wird im Folgenden lediglich auf jene Vorteile und Ausgestaltungen des erfindungsgemäßen Werkzeughalters eingegangen, welche nicht bereits vorstehend im Zusammenhang mit den Vorteilen und Ausgestaltungen des erfindungsgemäßen Verfahrens und der erfindungsgemäßen Vorrichtung erläutert worden sind.

Bei dem erfindungsgemäßen Werkzeughalter ist die Spannmutter auf höhere Dehnwerte elastisch dehnbar als die Spannzange und/oder das Spannzangenfutter. Dies hat den Vorteil, dass nach einer ungleichförmigen Temperierung des Werkzeughalters und Ausübung eines Spannmutter-Anzugsmoments der anschließende Temperaturausgleich zwischen den Bauteilen des Werkzeughalters nicht mit der Gefahr von Spannungsrissen einhergeht.

Insbesondere ist es bevorzugt, wenn die Spannmutter aus einem Warmarbeitsstahl hergestellt ist. Warmarbeitsstähle ermöglichen eine elastische Formänderung bis hin zu Dehnwerten von zwischen ungefähr 6% und ungefähr 10%. Darüber hinaus weisen Warmarbeitsstähle eine sehr hohe Warmfestigkeit auf. Beispielsweise ist die Spannmutter aus X38CrMoV5 hergestellt.

Für das Spannfutter werden vorzugsweise Einsatzstähle (beispielsweise 16MnCr5) verwendet, welche eine gehärtete Randschicht aufweisen.

Bevorzugt ist es ferner, wenn die Spannmutter - im Unterschied zu bekannten Spannmuttern aus Einsatzstahl - durchgehärtet ist. Auf diese Weise weist der Werkstoff der Spannmutter keine lokal unterschiedlichen Eigenschaften auf und ist in dem mit dem Spannfutter fertig verschraubten Zustand aus hohen Temperaturen von bis zu 500°C abkühlbar, ohne dass die Gefahr von Spannungsrissen besteht.

Die vorstehend beschriebenen Maßnahmen gehen möglicherweise mit einer Verteuerung der Herstellung der Spannmutter einher, welche üblicherweise aus einem günstigeren Einsatzstahl hergestellt wird. Dafür ermöglichen es die erfindungsgemäßen Maßnahmen aber, die Losbrechmomente eines Werkzeugs auf bisher nicht einmal ansatzweise erreichte Werte zu erhöhen.

Ferner betrifft die Erfindung die Verwendung einer vorstehend beschriebenen Anordnung und/oder eines vorstehend beschriebenen Werkzeughalters zur Durchführung eines eingangs beschriebenen Verfahrens.

Weitere Merkmale und Vorteile der Erfindung sind Gegenstand der nachfolgenden Beschreibung und der zeichnerischen Darstellung eines bevorzugten Ausführungsbeispiels.

In den Zeichnungen zeigen:
- Figur 1: einen Längsschnitt einer Ausführungsform einer Vorrichtung zur Einrichtung eines Werkzeughalters, wobei die Vorrichtung eine Werkzeughalteraufnahme umfasst;
- Figur 2: einen Längsschnitt einer Ausführungsform eines Werkzeughalters, welcher ein Spannzangenfutter umfasst;
- Figur 3: einen Längsschnitt der Vorrichtung gemäß Figur 1 und des Werkzeughalters gemäß Figur 2, wobei das Spannzangenfutter in der Werkzeughalteraufnahme aufgenommen ist;
- Figur 4: eine der Figur 3 entsprechende Darstellung bei Temperierung einer Spannmutter des Werkzeughalters; und
- Figur 5: eine perspektivische Ansicht einer weiteren Ausführungsform einer Vorrichtung zur Einrichtung eines Werkzeughalters.

Gleiche oder funktional äquivalente Elemente sind in allen Figuren mit denselben Bezugszeichen bezeichnet.

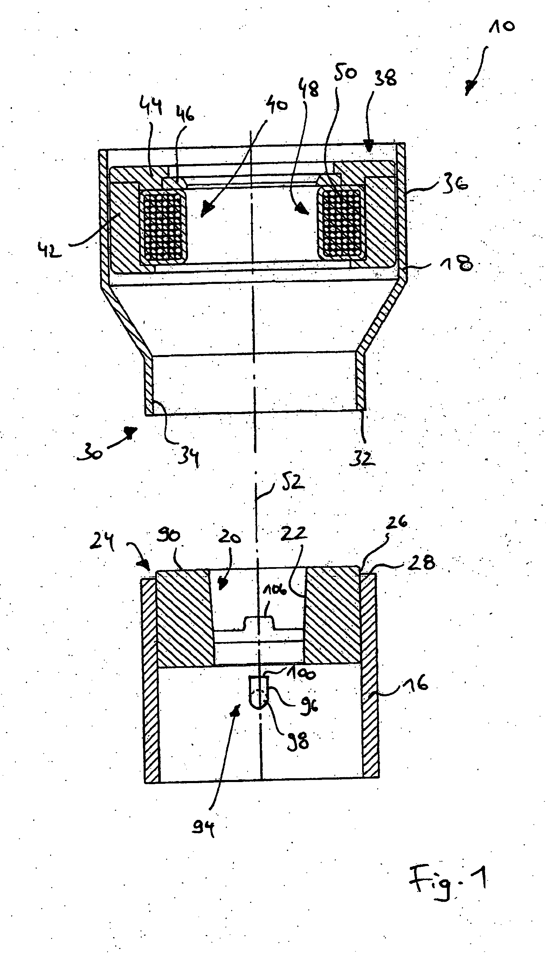

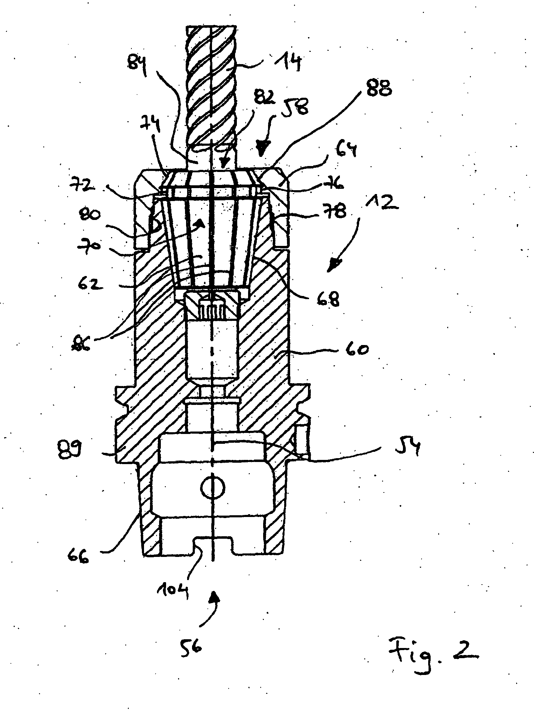

In Figur 1 ist eine Ausführungsform einer Vorrichtung 10 zur Einrichtung eines in Figur 2 dargestellten Werkzeughalters 12 dargestellt. Der Werkzeughalter 12 dient zum Halten eines Werkzeugs 14, welches insbesondere in Form eines Schrupp-Fräswerkzeugs ausgebildet ist.

Die Vorrichtung 10 umfasst ein erstes Gehäuseteil 16 und ein hiervon separates zweites Gehäuseteil 18. Das Gehäuseteil 16 umfasst eine Werkzeughalteraufnahme 20 mit einer Aufnahmefläche 22. Die Aufnahmefläche 22 ist konisch ausgebildet und verjüngt sich bezogen auf die Schwerkraft Richtung nach unten hin.

Das erste Gehäuseteil 16 weist einen ringförmigen Rand 24 auf. An dem Rand 24 ist eine in Umfangsrichtung verlaufende, ringförmige Zentrierfläche 26 vorgesehen und eine sich in einer Ringebene erstreckende Anschlagfläche 28.

Das zweite Gehäuseteil 18 weist einen in Gebrauchslage unteren Rand 30 auf, welcher stirnseitig durch eine sich in einer Ebene erstreckende Ringfläche 32 begrenzt ist. Benachbart zur Ringfläche 32 ist eine zylindermantelförmige Führungsfläche 34 vorgesehen.

Das zweite Gehäuseteil 18 weist einen Gehäuseabschnitt 36 auf, welcher im Vergleich zu dem Rand 30 nach radial außen erweitert ist.

Der Gehäuseabschnitt 36 begrenzt einen zylindrischen Aufnahmeraum 38, in welchem ein Teil einer Temperiereinrichtung 40 angeordnet ist, welcher fest mit dem zweiten Gehäuseteil 18 verbunden ist, beispielsweise mittels einer Press- oder einer Klebverbindung.

Die Temperiereinrichtung 40 umfasst ein oder mehrere Halteelemente 42, 44 und 46, welche zur formflüssigen Aufnahme eines ringförmigen Temperierelements 48 dienen. Das Temperierelement 48 ist insbesondere in Form einer Induktionsspule 50 ausgebildet.

Die Gehäuseteile 16 und 18 erstrecken sich konzentrisch zu einer gemeinsamen Gehäuseachse 52.

Ein weiterer Teil der Temperiereinrichtung 40 ist durch eine Kühleinrichtung 94 gebildet, welche insbesondere mit dem ersten Gehäuseteil 16 verbunden oder mit diesem verbindbar ist. Die Kühleinrichtung 94 umfasst ein Kühlleitung 96, welche über einen Eingang 98 mit einem Kühlmedium, insbesondere gekühlter Luft, versorgt wird. Die Kühlleitung 96 weist einen Ausgang 100 auf, welcher so ausgerichtet ist, dass ein von der Werkzeughalteraufnahme 20 begrenzter Raum mit einem kühlenden Luftstrom beaufschlagt werden kann.

Der in Figur 2 dargestellte Werkzeughalter 12 erstreckt sich entlang einer Werkzeughalterachse 54 zwischen einem werkzeugmaschinenseitigen Ende 56 und einem werkzeugseitigen Ende 58. Der Werkzeughalter 12 weist ein Spannzangenfutter 60, eine Spannzange 62 und eine Spannmutter 64 auf.

Das Spannzangenfutter 60 weist an seinem werkzeugmaschinenseitigen Ende 56 eine konische Klemmfläche 66 auf. An dem werkzeugseitigen Ende 58 des Spannzangenfutters 60 ist eine sich in Richtung auf das werkzeugmaschinenseitige Ende 56 hin verjüngende, erste konische Spannfläche 68 vorgesehen, welche zur Aufnahme einer ersten konischen Spannfläche 70 der Spannzange 62 dient.

Die Spannfläche 70 der Spannzange 62 mündet in Richtung auf das werkzeugseitige Ende 58 hin an einer Ringnut 72, welche in Richtung auf das werkzeugseitige Ende 58 hin von einer zweiten konischen Spannfläche 74 begrenzt ist.

Die Spannmutter 64 weist einen sich nach radial innen erstreckenden, schulterförmigen Vorsprung 76 auf, welcher in die Ringnut 72 der Spannzange 62 ragt. Ferner weist die Spannmutter 64 ein Innengewinde 78 auf, welches mit einem Außengewinde 80 zusammenwirkt, welches an dem werkzeugseitigen Ende 58 des Spannzangenfutters 60 ausgebildet ist.

Die Spannzange 62 weist eine zentrische, im Wesentlichen hohlzylindrische Öffnung 82 auf, in welcher ein Werkzeugschaft 84 des Werkzeugs 14 einführbar ist.

Die Spannzange 62 umfasst eine Mehrzahl von Schlitzen 86, welche sich parallel zu der Werkzeughalterachse 54 erstrecken. Die Schlitze 86 sind insbesondere regelmäßig über den Umfang der Spannzange 62 verteilt.

Die Spannmutter 64 weist eine zweite konische Spannfläche 88 auf, welche mit der zweiten Spannfläche 74 der Spannzange 62 zusammenwirkt.

Der in Figur 2 dargestellte, vormontierte Zustand des Werkzeughalters 12 und des Werkzeugs 14 wird erreicht, indem in einem Ausgangszustand die Bauteile des Werkzeughalters 12 voneinander getrennt bereitgestellt werden. In einem ersten Vormontageschritt wird die Spannzange 62 mit der Spannmutter 64 verrastet, wobei der Vorsprung 76 der Spannmutter 64 in Eingriff mit der Ringnut 72 der Spannzange 62 gebracht wird. Anschließend wird das Werkzeug 14 mit dem Werkzeugschaft 84 voraus in die Öffnung 82 der Spannzange 62 eingeführt. In einem folgenden Schritt wird die Spannzange 62 mit ihrer ersten Spannfläche 70 voraus in den durch die erste Spannfläche 68 des Spannzangenfutters 60 begrenzten Raum eingeführt und die Spannflächen 68 und 70 miteinander in Kontakt gebracht. Schließlich wird die Spannmutter 64 mit dem Innengewinde 78 auf das Außengewinde 80 des Spannzangenfutters 60 aufgeschraubt. Hierbei wird die Spannmutter 64 zunächst nur mit einem ersten Anzugsmoment angezogen, welches beispielsweise zwischen ungefähr 1 Nm und 5 Nm beträgt und insbesondere mit Handkraft ausgeübt wird. Das erste Anzugsmoment kann aber auch höher sein und beispielsweise zwischen ungefähr 50 Nm und ungefähr 140 Nm betragen.

Die vorstehend beschriebene Einheit aus Werkzeughalter 12 und Werkzeug 14 wird nun in die Werkzeughalteraufnahme 20 der Vorrichtung 10 eingesetzt. Hierbei gelangt die Klemmfläche 66 des Spannzangenfutters 60 in Kontakt mit der Aufnahmefläche 22 der Werkzeughalteraufnahme 20. Hierdurch wird der Werkzeughalter 12 mit seiner Werkzeughalterachse 54 kollinear zu der Gehäuseachse 52 der Vorrichtung 10 ausgerichtet. Für einen sicheren Halt des Werkzeughalters 12 ist es bevorzugt, wenn das Spannzangenfutter 60 einen schulterförmigen Absatz 89 aufweist, welcher auf einer Auflagefläche 90 der Werkzeughalteraufnahme 20 auflegbar ist.

In einem Folgeschritt wird das zweite Gehäuseteil 18 mit dem Rand 30 voraus auf das erste Gehäuseteil 16 aufgesetzt. Hierbei liegt der Rand 30 mit seiner Ringfläche 32 auf der Anschlagfläche 28 des Rands 24 auf. Ferner ist die Führungsfläche 34 mit Hilfe der Zentrierfläche 26 geführt, so dass die Gehäuseteile 16 und 18 zentrisch zu der Gehäuseachse 52 ausgerichtet sind.

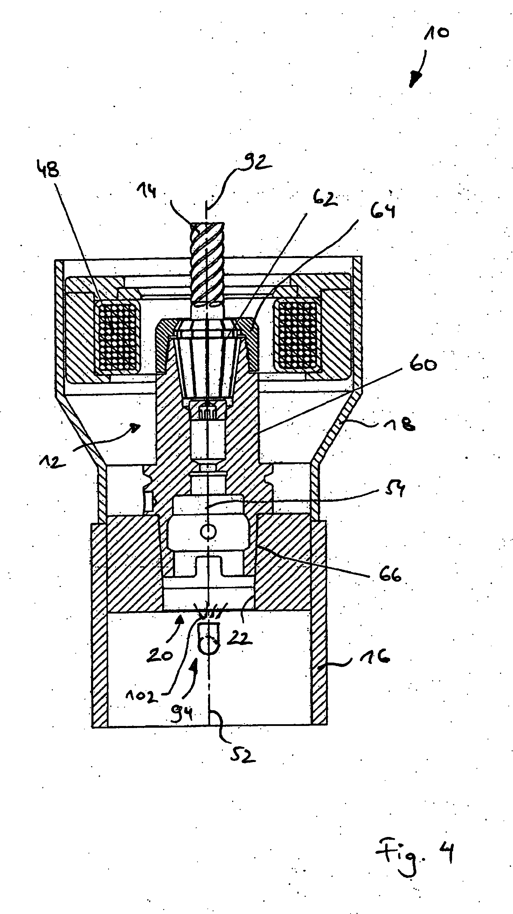

In einem (in Figur 4 dargestellten) miteinander gefügten Zustand der Gehäuseteile 16 und 18 ist das Temperierelement 48 so angeordnet, dass es die Spannmutter 64 in Umfangsrichtung umfasst. Durch Bestromung des Temperierelements mit einem Wechselstrom wird ein Wechselmagnetfeld erzeugt, welches in der Spannmutter 64 Wechselströme induziert. Hierdurch wird die Spannmutter 64 erwärmt. Hierdurch dehnt sich die Spannmutter 64 aus.

Bei Bedarf ist es zusätzlich möglich, mittels eines Kühlluftstroms 102 das Spannzangenfutter 60 zu kühlen.

Nach Erwärmung der Spannmutter 64 (und gegebenenfalls nach Kühlung des Spannzangenfutters 60) kann das Gehäuseteil 18 wieder von dem Gehäuseteil 16 getrennt werden. Abschließend wird die noch erwärmte Spannmutter 64 mit einem zweiten Anzugsmoment, welches beispielsweise höher ist als das erste Anzugsmoment, angezogen. Durch die Ausdehnung der Spannmutter 64 kann diese im Vergleich zu einer nicht erwärmten Spannmutter 64 mit einem verlängerten Verdrehweg mit dem Spannzangenfutter 60 verschraubt werden.

Bereits im noch erwärmten Zustand der Spannmutter 64 ist das Werkzeug 14 fest mit der Spannzange 62 verspannt. Mit zunehmender Abkühlung der Spannmutter 64 zieht sich diese weiter zusammen, sodass sich die zwischen der Spannzange 62 und dem Werkzeugschaft 84 des Werkzeugs 14 wirkende Spannkraft weiter erhöht. Hierdurch ist das Werkzeug 14 besonders zuverlässig in dem Werkzeughalter 12 fixiert.

Die vorstehend beschriebene Vorrichtung und das vorstehend beschriebene Verfahren zur Einrichtung des Werkzeughalters 12 ermöglichen es darüber hinaus, eine zentrale Werkzeugachse 92 des Werkzeugs 14 sehr genau kollinear zu der Werkzeughalterachse 54 des Werkzeughalters 12 auszurichten.

Die genannten Anzugsmomente können insbesondere mittels eines handgeführten Drehmomentschlüssels ausgeübt werden. Beispielsweise handelt es sich bei dem Drehmomentschlüssel um einen Rollenschlüssel, welcher zum Ergreifen der Spannmutter 64 ausgebildet ist. Ein Verdrehen des Spannzangenfutters 60 wird durch Eingriff eines Sicherungsabschnitts 104 (vergleiche Figur 2) mit einem entsprechenden Gegenabschnitt 106 der Werkzeughalteraufnahme 20 (vergleiche Figur 1) verhindert.

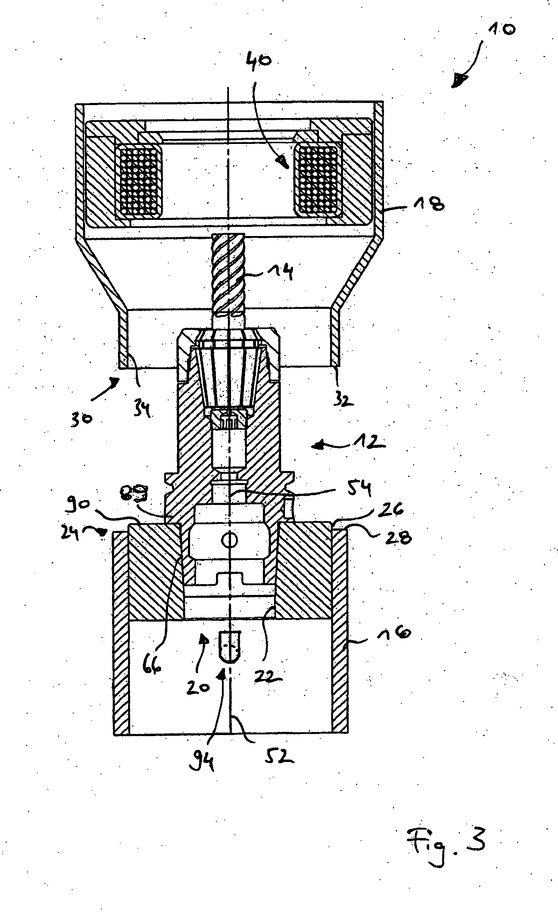

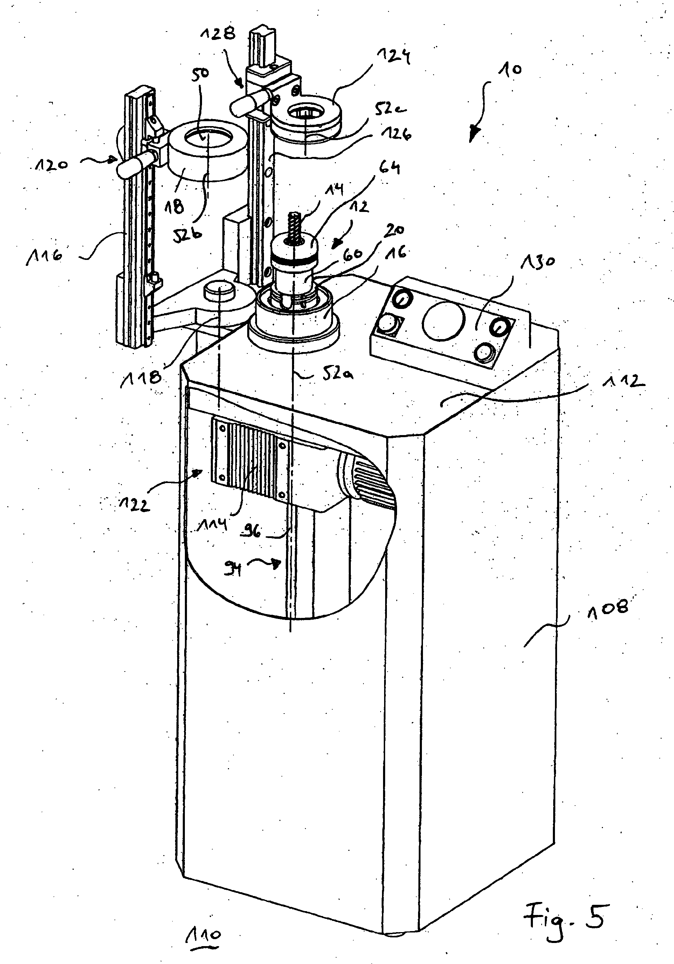

In Figur 5 ist eine weitere Ausführungsform einer Vorrichtung 10 zur Einrichtung eines Werkzeughalters 12 dargestellt. Diese Ausführungsform weist einen zu der vorstehend unter Bezugnahme auf die Figuren 1 bis 4 beschriebenen Ausführungsform ähnlichen Aufbau auf. Daher wird im Folgenden näher auf die Unterschiede zwischen den Ausführungsformen eingegangen; bezüglich der Gemeinsamkeiten wird auf die vorstehende Beschreibung verwiesen.

Die Vorrichtung 10 gemäß Figur 5 umfasst ein Gehäuse 108, welches auf einer Aufstellfläche 110 aufstellbar ist. Das Gehäuse 108 umfasst eine Arbeitsfläche 112, welche vorzugsweise auf einer Höhe von ca. 60 cm bis 100 cm über der Aufstellfläche 110 angeordnet ist.

Das Gehäuse 108 dient zur Anordnung eines ersten Gehäuseteils 16, welches fest mit dem Gehäuse 108 verbunden ist. In dem Gehäuseteil 16 ist eine Werkzeughalteraufnahme 20 um eine Achse 52a drehbar gelagert. Die Werkzeughalteraufnahme 20 ist mittels eines an dem Gehäuse 108 angeordneten motorischen Antriebs 114 um die Achse 52a drehbar antreibbar.

Ein zweites Gehäuseteil 18 ist an einem Gehäuseteilhalter 116 parallel zu einer Achse 52b verschieblich gelagert. Das zweite Gehäuseteil 18 dient zur Anordnung einer Induktionsspule 50. Der Gehäuseteilhalter 116 ist um eine Schwenkachse 118 relativ zu dem Gehäuse 108 verschwenkbar. Das Gehäuseteil 18 ist mittels einer Klemmeinrichtung 120 lösbar an dem Gehäuseteilhalter 116 festlegbar.

Der motorischen Antrieb 114 ist Teil einer Verschraubungseinrichtung 122. Diese umfasst außerdem ein Konterelement 124 in Form eines (Rollen-)Spannschlüssels. Das Konterelement 124 ist an einem Konterelementhalter 126 parallel zu einer Achse 52c verschieblich gelagert. Der Konterelementhalter 126 ist um die Schwenkachse 118 relativ zu dem Gehäuse 108 verschwenkbar. Das Konterelement 124 ist mittels einer Klemmeinrichtung 128 lösbar an dem Konterelementhalter 126 festlegbar.

Die Vorrichtung 10 umfasst ferner eine Steuereinheit 130 zur Ansteuerung des motorischen Antriebs 114 und der Induktionsspule 50. Insbesondere sind mittels der Steuereinheit 130 Anzugsmomente zum Verschrauben der Spannmutter 64 mit dem Spannzangenfutter 60 eines Werkzeughalters 12, Temperaturen bzw. Stromstärken zur Bestromung der Induktionsspule 50 sowie Bestromungszeiten vorgebbar.

Mit der in Figur 5 dargestellten Vorrichtung 10 kann zunächst ein erstes Anzugsmoment ausgeübt werden, um den Werkeughalter 12 und ein Werkzeug 14 relativ zueinander zu fixieren. Hierfür werden zunächst das Werkzeug 14 und der Werkzeughalter 12 miteinander gefügt und die Spannmutter 64 mit Handkraft angezogen. Dann wird das Spannzangenfutter 60 dieser Vormontageeinheit mit der Werkzeughalteraufnahme 20 gefügt, in welcher die Vormontageeinheit drehfest gehalten ist (beispielsweise unter Verwendung vorstehend beschriebener Abschnitte 104 und 106). Dann wird der Konterelementhalter 126 so um die Schwenkachse 118 verschwenkt, dass die Achsen 52c und 52a zueinander kollinear ausgerichtet sind. Dann wird das Konterelement 124 entlang der Achse 52c relativ zu dem Konterelementhalter 126 verschoben, bis das Konterelement 124 in Eingriff mit der Spannmutter 64 gelangt. Dann wird der motorische Antrieb 114 eingeschaltet, welcher die Werkzeughalteraufnahme 20 und somit auch das Spannzangenfutter 60 in Drehrichtung antreibt. Sobald ein von der Steuereinheit 130 vorgebbares, erstes Anzugsmoment erreicht wird, schaltet der motorische Antrieb 114 ab. Das erste Anzugsmoment kann beispielsweise zwischen ungefähr 50 Nm und ungefähr 140 Nm betragen.

In einem folgenden Schritt wird das Konterelement 124 wieder außer Eingriff mit der Spannmutter 64 gebracht. Anschließend wird der Gehäuseteilhalter 116 um die Schwenkachse 118 verschwenkt bis die Achsen 52b und 52a zueinander kollinear ausgerichtet sind. Dann wird das zweite Gehäuseteil 18 mit der Induktionsspule 50 entlang der Achse 52b verschoben, bis die Induktionsspule 50 die Spannmutter 64 in Umfangsrichtung umfasst. Danach wird die Spannmutter 64 durch Bestromung der Induktionsspule erwärmt. Vorzugsweise wird gleichzeitig mittels einer Kühlleitung 96 einer Kühleinrichtung 94 ein kühlender Luftstrom auf das Spannzangenfutter 60 gelenkt.

Im Anschluss an die Temperierung des Werkzeughalters 14 wird das zweite Gehäuseteil 18 wieder von der Spannmutter 64 entfernt.

Danach wird das Konterelement 124 wieder in Eingriff mit der noch erwärmten Spannmutter 64 gebracht. Dann wird der motorische Antrieb 114 wieder aktiviert, bis ein zweites, Anzugsmoment erreicht ist, welches beispielsweise höher ist als das erste Anzugsmoment oder gleich dem ersten Anzugsmoment ist. Abschließend wird das Konterelement 124 wieder von der Spannmutter entfernt, und der Werkzeughalter 12 mit daran fixiertem Werkzeug 14 kann für die Bearbeitung eines Werkstücks eingesetzt werden.

Die Hubbewegung des zweiten Gehäuseteils 18 relativ zu dem Gehäuseteilhalter 116 entlang der Achse 52b und/oder die Hubbewegung des Konterelements 124 relativ zu dem Konterelementhalter 126 entlang der Achse 52c kann manuell oder automatisiert erfolgen. Gleiches gilt für die Betätigung der Klemmeinrichtungen 120 und/oder 128.

Bei der in Figur 5 dargestellten Vorrichtung sind der Gehäuseteilhalter 116 und der Konterelementhalter 126 um dieselbe Schwenkachse 118 schwenkbar. Bei einer alternativen, in der Zeichnung nicht dargestellten Ausführungsform sind der Gehäuseteilhalter 116 und der Konterelementhalter 126 um unterschiedliche Schwenkachsen verschwenkbar.

## Patentansprüche

1. Verfahren zur Einrichtung eines Werkzeughalters (12), welcher ein Spannzangenfutter (60), eine Spannzange (62) und eine mit dem Spannzangenfutter (60) verschraubbare Spannmutter (64) aufweist, wobei die Spannzange (62) zum Halten eines Werkzeugs (14) ausgebildet ist und mittels der Spannmutter (64) mit dem Werkzeug (14) und dem Spannzangenfutter (60) verspannt wird, **dadurch gekennzeichnet, dass** die Spannmutter (64) und das Spannzangenfutter (60) mit einem ersten Anzugsmoment miteinander verschraubt werden, dass anschließend die Spannmutter (64) und/oder das Spannzangenfutter (60) so temperiert wird oder werden, dass die Spannmutter (64) eine höhere Temperatur aufweist als das Spannzangenfutter (60) und/oder die Spannzange (62), und dass, während die Spannmutter (64) eine höhere Temperatur aufweist als das Spannzangenfutter (60) und/oder die Spannzange (62), die Spannmutter (64) und das Spannzangenfutter (60) mit einem zweiten Anzugsmoment miteinander verschraubt werden.

2. Verfahren nach Anspruch 1, **dadurch gekennzeichnet, dass** die Spannmutter (64) erwärmt wird.

3. Verfahren nach Anspruch 2, **dadurch gekennzeichnet, dass** die Spannmutter (64) mittels einer Induktionsspule erwärmt wird.

4. Verfahren nach einem der voranstehenden Ansprüche, **dadurch gekennzeichnet, dass** das Spannzangenfutter (60) und/oder die Spannzange (62) gekühlt wird oder werden.

5. Verfahren nach Anspruch 5, **dadurch gekennzeichnet, dass** die Spannzange (62) und/oder das Spannzangenfutter (60) so temperiert wird oder werden, dass die Spannzange (62) eine niedrigere Temperatur aufweist als das Spannzangenfutter (60).

6. Verfahren nach Anspruch 4 oder 5, **dadurch gekennzeichnet, dass** die Spannmutter (64) erwärmt wird und gleichzeitig das Spannzangenfutter (60) und/oder die Spannzange (62) gekühlt wird oder werden.

7. Verfahren nach einem der voranstehenden Ansprüche, **dadurch gekennzeichnet, dass** das erste Anzugsmoment mit Handkraft erzeugt wird.

8. Verfahren nach einem der voranstehenden Ansprüche, **dadurch gekennzeichnet, dass** das zweite Anzugsmoment höher ist als das erste Anzugsmoment.

9. Verfahren nach einem der voranstehenden Ansprüche, **dadurch gekennzeichnet, dass** das erste Anzugsmoment höchstens ungefähr 80% des zweiten Anzugsmoments beträgt.

10. Verfahren nach einem der Ansprüche 1 bis 8, **dadurch gekennzeichnet, dass** das erste Anzugsmoment mindestens ungefähr 80% des zweiten Anzugsmoments beträgt.

11. Verfahren nach einem der Ansprüche 1 bis 7, **dadurch gekennzeichnet, dass** das erste Anzugsmoment zumindest ungefähr gleich dem zweiten Anzugsmoment ist.

12. Verfahren nach einem der Ansprüche 1 bis 7, **dadurch gekennzeichnet, dass** das erste Anzugsmoment höher als das zweite Anzugsmoment ist.

13. Verfahren nach einem der voranstehenden Ansprüche, **dadurch gekennzeichnet, dass** das zweite Anzugsmoment dasselbe Anzugsmoment ist, welches zur Einrichtung des Werkzeughalters (12) für ein bestimmtes Werkzeug (14) vorgesehen ist, wenn weder die Spannmutter (64) noch das Spannzangenfutter (60) temperiert wird.

14. Anordnung, umfassend einen Werkzeughalter (12) und eine Vorrichtung (10) zur Einrichtung des Werkzeughalters (12), wobei die Vorrichtung (10) eine Temperiereinrichtung (40) umfasst, **dadurch gekennzeichnet, dass** der Werkzeughalter (12) ein Spannzangenfutter (60), eine Spannzange (62) und eine mit dem Spannzangenfutter (60) verschraubbare Spannmutter (64) aufweist, wobei die Spannzange (62) zum Halten eines Werkzeugs (14) ausgebildet und mittels der Spannmutter (64) mit dem Werkzeug (14) und dem Spannzangenfutter (60) verspannbar ist, dass mittels der Temperiereinrichtung (40) der Werkzeughalter (12) so temperierbar ist, dass die Spannmutter (64) eine höhere Temperatur aufweist als das Spannzangenfutter (60) und/oder die Spannzange (62), und dass die Vorrichtung (10) eine Verschraubungseinrichtung (122) zum Verschrauben der Spannmutter (64) mit dem Spannzangenfutter (60) umfasst.

15. Anordnung nach Anspruch 14, **dadurch gekennzeichnet, dass** die Temperiereinrichtung (40) mindestens ein Temperierelement (48) zur Erwärmung der Spannmutter (64) und mindestens eine Kühleinrichtung (94) zur Kühlung des Spannzangenfutters (60) und/oder der Spannzange (62) umfasst.

16. Anordnung nach Anspruch 15, **dadurch gekennzeichnet, dass** das Temperierelement (48) und die Kühleinrichtung (94) gleichzeitig ansteuerbar sind.

17. Werkzeughalter (12), welcher ein Spannzangenfutter (60), eine Spannzange (62) und eine mit dem Spannzangenfutter (60) verschraubbare Spannmutter (64) aufweist, wobei die Spannzange (62) zum Halten eines Werkzeugs (14) ausgebildet und mittels der Spannmutter (64) mit dem Werkzeug (14) und dem Spannzangenfutter (60) verspannbar ist, **dadurch gekennzeichnet, dass** die Spannmutter (64) aus einem Werkstoff hergestellt ist, welcher eine im Vergleich zum Werkstoff des Spannzangenfutters (60) und/oder der Spannzange (62) höhere elastische Formveränderbarkeit aufweist.

18. Werkzeughalter (12) nach Anspruch 17, **dadurch gekennzeichnet, dass** die Spannmutter (64) aus einem Warmarbeitsstahl hergestellt ist.

19. Werkzeughalter (12) nach Anspruch 17 oder 18, **dadurch gekennzeichnet, dass** die Spannmutter (64) durchgehärtet ist.

20. Verwendung einer Anordnung nach einem der Ansprüche 14 bis 16 und/oder eines Werkzeughalters (12) nach einem der Ansprüche 17 bis 19 zur Durchführung eines Verfahrens nach einem der Ansprüche 1 bis 13.

## Claims

1. Method for setting up a tool holder (12) having a collet chuck (60), a collet (62) and a clamping nut (64) which can be screwed together with the collet chuck (60), wherein the collet (62) is designed to hold a tool (14) and is clamped together with the tool (14) and the collet chuck (60) by means of the clamping nut (64), **characterised in that** the clamping nut (64) and the collet chuck (60) are screwed together with a first tightening torque, that the temperature of the clamping nut (64) and/or the collet chuck (60) is controlled such that the clamping nut (64) has a higher temperature than the collet chuck (60) and/or the collet (62), and that, while the clamping nut (64) has a higher temperature than the collet chuck (60) and/or the collet (62), the clamping nut (64) and the collet chuck (60) are screwed together with a second tightening torque.

2. Method according to claim 1, **characterised in that** the clamping nut (64) is heated.

3. Method according to claim 2, **characterised in that** the clamping nut (64) is heated by means of an induction coil.

4. Method according to one of the preceding claims, **characterised in that** the collet chuck (60) and/or the collet (62) is or are cooled.

5. Method according to claim 5, **characterised in that** the temperature of the collet (62) and/or the collet chuck (60) is controlled in such a way that the collet (62) has a lower temperature than the collet chuck (60).

6. Method according to claim 4 or 5, **characterised in that** the clamping nut (64) is heated and the collet chuck (60) and/or the collet (62) is or are simultaneously cooled.

7. Method according to one of the preceding claims, **characterised in that** the first tightening torque is generated using manual force.

8. Method according to one of the preceding claims, **characterised in that** the second tightening torque is higher than the first tightening torque.

9. Method according to one of the preceding claims, **characterised in that** the first tightening torque amounts at most to approximately 80% of the second tightening torque.

10. Method according to one of the claims 1 to 8, **characterised in that** the first tightening torque amounts at least to approximately 80% of the second tightening torque.

11. Method according to one of the claims 1 to 7, **characterised in that** the first tightening torque is at least approximately equal to the second tightening torque.

12. Method according to one of the claims 1 to 7, **characterised in that** the first tightening torque is higher than the second tightening torque.

13. Method according to one of the preceding claims, **characterised in that** the second tightening torque is the same tightening torque which is used to set up the tool holder (12) for a particular tool (14) if the temperature of neither the clamping nut (64) nor the collet chuck (60) is controlled.

14. Arrangement comprising a tool holder (12) and a device (10) for setting up the tool holder (12), wherein the device (10) comprises a temperature-control device (40), **characterised in that** the tool holder (12) has a collet chuck (60), a collet (62) and a clamping nut (64) which can be screwed together with the collet chuck (60), wherein the collet (62) is designed to hold a tool (14) and is clamped together with the tool (14) and the collet chuck (60) by means of the clamping nut (64), that the temperature of the tool holder (12) can be controlled by means of the temperature-control device (40) in such a way that the clamping nut (64) has a higher temperature than the collet chuck (60) and/or the collet (62), and that the device (10) comprises a screw connection (122) for screwing together the clamping nut (64) and the collet chuck (60).

15. Arrangement according to claim 14, **characterised in that** the temperature-control device (40) comprises at least one heating element (48) for heating the clamping nut (64) and at least one cooling device (94) for cooling the collet chuck (60) and/or the collet (62).

16. Arrangement according to claim 15, **characterised in that** the heating element (48) and the cooling device (94) can be actuated simultaneously.

17. Tool holder (12) having a collet chuck (60), a collet (62) and a clamping nut (64) which can be screwed together with the collet chuck (60), wherein the collet (62) is designed to hold a tool (14) and can be clamped together with the tool (14) and the collet chuck (60) by means of the clamping nut (64), **characterised in that** the clamping nut (64) is manufactured of a material which displays a greater elastic malleability in comparison with the material of the collet chuck (60) and/or the collet (62).

18. Tool holder (12) according to claim 17, **characterised in that** the clamping nut (64) is manufactured of a hot work tool steel.

19. Tool holder (12) according to claim 17 or 18, **characterised in that** the clamping nut (64) is through-hardened.

20. Use of an arrangement according to one of the claims 14 to 16 and/or of a tool holder (12) according to one of the claims 17 to 19 to carry out a method according to one of the claims 1 to 13.

## Revendications

1. Procédé de configuration d'un porte-outil (12), qui comprend un mandrin à pince de serrage (60), une pince de serrage (62) et un écrou de serrage (64) pouvant être vissée avec le mandrin à pince de serrage (60), la pince de serrage (62) étant conçue pour le maintien d'un outil (14) et étant serrée à l'aide de l'écrou de serrage (64) avec l'outil (14) et le mandrin à pince de serrage (60), **caractérisé en ce que** l'écrou de serrage (64) et le mandrin à pince de serrage (60) sont vissés ensemble avec un premier couple de serrage, **en ce que** l'écrou de serrage (64) et/ou le mandrin à pince de serrage (60) est/sont ensuite régulé(s) en température de façon à ce que l'écrou de serrage (64) présente une température plus élevée que celle du mandrin à pince de serrage (60) et/ou de la pince de serrage (62), et **en ce que**, tandis que l'écrou de serrage (64) présente une température plus élevée que celle du mandrin à pince de serrage (60) et/ou de la pince de serrage (62), l'écrou de serrage (64) et le mandrin à pince de serrage (60) sont vissés ensemble avec un deuxième couple de serrage.

2. Procédé selon la revendication 1, **caractérisé en ce que** l'écrou de serrage (64) est chauffé.

3. Procédé selon la revendication 2, **caractérisé en ce que** l'écrou de serrage (64) est chauffé à l'aide d'une bobine d'induction.

4. Procédé selon l'une des revendications précédentes, **caractérisé en ce que** le mandrin à pince de serrage (60) et/ou la pince de serrage (62) est/sont refroidi(s).

5. Procédé selon la revendication 5, **caractérisé en ce que** la pince de serrage (62) et/ou le mandrin à pince de serrage (60) est/sont régulé(s) en température de façon à ce que la pince de serrage (62) présente une température plus basse que celle du mandrin à pince de serrage (60).

6. Procédé selon la revendication 4 ou 5, **caractérisé en ce que** l'écrou de serrage (64) est chauffée et le mandrin à pince de serrage (60) et/ou la pince de serrage (62) est/sont refroidi(s) en même temps.

7. Procédé selon l'une des revendications précédentes, **caractérisé en ce que** le premier couple de serrage est généré manuellement.

8. Procédé selon l'une des revendications précédentes, **caractérisé en ce que** le deuxième couple de serrage est supérieur au premier couple de serrage.

9. Procédé selon l'une des revendications précédentes, **caractérisé en ce que** lé premier couple de serrage représente au maximum 80% du deuxième couple de serrage.

10. Procédé selon l'une des revendications 1 à 8, **caractérisé en ce que** le premier couple de serrage représente au moins environ 80% du deuxième couple de serrage.

11. Procédé selon l'une des revendications 1 à 7, **caractérisé en ce que** le premier couple de serrage est au moins approximativement égal au deuxième couple de serrage.

12. Procédé selon l'une des revendications 1 à 7, **caractérisé en ce que** le premier couple de serrage est supérieure au deuxième couple de serrage.

13. Procédé selon l'une des revendications précédentes, **caractérisé en ce que** le deuxième couple de serrage est le même couple de serrage que celui qui est prévu pour la configuration du porte-outil (12) pour un outil (14) déterminé, si ni l'écrou de serrage (64) ni le mandrin à pince de serrage (60) n'est régulé en température.

14. Dispositif comprenant un porte-outil (12) et un dispositif (10) pour la configuration du porte-outil (12), le dispositif (10) comprenant un dispositif de régulation de température (40), **caractérisé en ce que** le porte-outil (12) comprend un mandrin à pince de serrage (60), une pince de serrage (62) et un écrou de serrage (64) pouvant être vissé avec le mandrin à pince de serrage (60), la pince de serrage (62) étant conçue pour le maintien d'un outil (14) et pouvant être serré à l'aide de l'écrou de serrage (64) avec l'outil (14) et le mandrin à pince de serrage (60), **en ce que**, à l'aide du dispositif de régulation de température (40), le porte-outil (12) puisse être régulé en température de façon à ce que l'écrou de serrage (64) présente une température plus élevée que celle du mandrin à pince de serrage (60) et/ou de la pince de serrage (62), et **en ce que** le dispositif (10) comprend un système de vissage (122) pour le vissage de l'écrou de serrage (64) avec le mandrin à pince de serrage (60).

15. Dispositif selon la revendication 14, **caractérisé en ce que** le dispositif de régulation de température (40) comprend au moins un élément de régulation de température (48) pour le chauffage de l'écrou de serrage (64) et au moins un dispositif de refroidissement (94) pour le refroidissement du mandrin à pince de serrage (60) et/ou de la pince de serrage (62).

16. Dispositif selon la revendication 15, **caractérisé en ce que** l'élément de régulation de température (48) et le dispositif de refroidissement (94) peuvent être contrôlés simultanément.

17. Porte-outil (12) qui comprend un mandrin à pince de serrage (60), une pince de serrage (62) et un écrou de serrage (64) pouvant être vissé avec le mandrin à pince de serrage (60), la pince de serrage (62) étant conçue pour le maintien d'un outil (14) et pouvant être serrée, à l'aide de l'écrou de serrage (64), avec l'outil (14) et le mandrin à pince de serrage (60), **caractérisé en ce que** l'écrou de serrage (64) est constitué d'un matériau qui présente une capacité de déformation élastique plus élevée par rapport au matériau du mandrin à pince de serrage (60) et/ou de la pince de serrage (62).

18. Porte-outil (12) selon la revendication 17, **caractérisé en ce que** l'écrou de serrage (64) est constitué d'un acier pour travail à chaud.

19. Porte-outil (12) selon la revendication 17 ou 18, **caractérisé en ce que** l'écrou de serrage (64) est trempé à coeur.

20. Utilisation d'un dispositif selon l'une des revendications 14 à 16 et/ou d'un porte-outil (12) selon l'une des revendications 17 à 19 pour la réalisation d'un procédé selon l'une des revendications 1 à 13.
